(19) Europäisches Patentamt
European Patent Office
Office européen des brevets

(11) **EP 3 539 083 B1**

(12) **EUROPÄISCHE PATENTSCHRIFT**

(45) Veröffentlichungstag und Bekanntmachung des Hinweises auf die Patenterteilung:
**18.06.2025 Patentblatt 2025/25**

(21) Anmeldenummer: **17735496.6**

(22) Anmeldetag: **04.07.2017**

(51) Internationale Patentklassifikation (IPC):
*G06T 7/44* *(2017.01)*

(52) Gemeinsame Patentklassifikation (CPC):
**G06T 7/44**

(86) Internationale Anmeldenummer:
**PCT/EP2017/066578**

(87) Internationale Veröffentlichungsnummer:
**WO 2018/086772 (17.05.2018 Gazette 2018/20)**

(54) **VERFAHREN UND VORRICHTUNG ZUM ERMITTELN EINES GLÄTTEWERTS EINER FRISUR**

METHOD AND DEVICE FOR DETERMINING A SMOOTHING VALUE OF A HAIRSTYLE

PROCÉDÉ ET DISPOSITIF POUR DÉTERMINER UNE VALEUR DE LISSAGE D'UNE COIFFURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2016 DE 102016222194**

(43) Veröffentlichungstag der Anmeldung:
**18.09.2019 Patentblatt 2019/38**

(73) Patentinhaber: **Henkel AG & Co. KGaA**
**40589 Düsseldorf (DE)**

(72) Erfinder: **KNÜBEL, Georg**
**40219 Düsseldorf (DE)**

(56) Entgegenhaltungen:
US-A1- 2005 211 599    US-A1- 2009 280 088
US-A1- 2010 106 679

• ZHANGHUI KUANG ET AL: "Local multiple orientations estimation using k-medoids", 2010 17TH IEEE INTERNATIONAL CONFERENCE ON IMAGE PROCESSING (ICIP 2010); 26-29 SEPT. 2010; HONG KONG, CHINA, IEEE, PISCATAWAY, NJ, USA, 26 September 2010 (2010-09-26), pages 109 - 112, XP031813364, ISBN: 978-1-4244-7992-4

• SUN CHAO ET AL: "2D hair strands generation based on template matching", 2014 4TH INTERNATIONAL CONFERENCE ON SIMULATION AND MODELING METHODOLOGIES, TECHNOLOGIES AND APPLICATIONS (SIMULTECH), SCITEPRESS, 28 August 2014 (2014-08-28), pages 261 - 266, XP032768757, DOI: 10.5220/0005107102610266

• N. LECHOCINSKI ET AL: "Fiber orientation measurement using polarization imaging", JOURNAL OF COSMETIC SCIENCE, vol. 62, no. 2, 1 April 2011 (2011-04-01), pages 85 - 100, XP055403948

• ANONYMOUS: "Quantitative orientation analysis", 14 March 2016 (2016-03-14), XP055403676, Retrieved from the Internet <URL:https://web.archive.org/web/20160314225552if_/http://bigwww.epfl.ch/demo/orientation/theoretical-background.pdf> [retrieved on 20170904]

• "ADVANCES IN ANATOMY, EMBRYOLOGY AND CELL BIOLOGY", vol. 219, 1 January 2016, SPRINGER, HEIDELBERG, DE, ISSN: 0301-5556, article ZSUZSANNA PÜSPÖKI ET AL: "Transforms and Operators for Directional Bioimage Analysis: A Survey", pages: 69 - 93, XP055403983, DOI: 10.1007/978-3-319-28549-8_3

**Beschreibung**

Die Erfindung betrifft ein Verfahren und eine Vorrichtung zum Ermitteln eines Glättewerts einer Frisur.

Eine Glättung von Haaren kann ein wichtiges kosmetisches Ziel sein, welches mittels mehrerer unterschiedlicher Verfahren erzielbar sein kann. Umgekehrt kann auch eine Kräuselung oder Lockung ein Ziel sein.

Zu solchen Verfahren zählen beispielsweise ein Anwenden nicht-reaktiver Haarpflegeprodukte zur Haarglättung, z.B. von Produkten, die für ein Belassen auf dem Haar vorgesehen sind, was auch als Leave-on-Produkt bezeichnet wird (beispielsweise ein so genannter Conditioner), und/oder von Produkten, bei denen vorgesehen ist, sie nach einer Anwendung wieder aus dem Haar zu entfernen, z.B. auszuspülen, wie beispielsweise eine Haarkur.

Ferner zählen zu Haarglättverfahren auch Anwendungen reaktiver Produkte wie beispielsweise Dauerwellen (welche geeignet sein können, dem Haar eine relativ dauerhafte gewünschte Struktur zu geben, die nicht nur wellig, sondern auch glatt sein kann), so genannte Straightener und Relaxer. Bei weiteren Haarglättverfahren können friseurtechnische Geräte, wie beispielsweise Glätteisen, angewendet werden.

Eine Bewertung eines Glättungsergebnisses, und ggf. auch einer Glätte des zu glättenden Haars, erfolgt bislang entweder subjektiv, d.h., das Haar wird nach der Glättung (und ggf. auch schon vorher) in Augenschein genommen und dahingehend beurteilt, ob eine zufriedenstellende Glättung erzielt wurde, oder indirekt durch ein Anwenden von Surrogat-Methoden. Als eine solche Surrogat-Methode kann beispielsweise eine Kämmbarkeit des Haars ermittelt werden, was indirekt Rückschlüsse auf eine Glattheit des Haars ermöglichen kann.

Eine solche Ermittlung der (z.B. quantifizierten) Kämmbarkeit kann relativ aufwändig in einem Labor durchgeführt werden, eignet sich jedoch nicht für einen Endverbraucher, und ist auch nicht mittels einer mobilen Anwendung nutzbar.

Das Dokument "Fiber orientation measurement using polarization imaging" von N. Lechocinski at al. J: Cosmet. Sci. beschreibt ein Verfahren zur Bestimmung der Lockigkeit von Haar durch Messung des im Haar gebrochenen und vom Haar reflektierten Lichtes. Das Verfahren nutzt die Anisotropie des Haares zur Erkennung einer Krümmung des Haares. Anisotropie wirkt durch Änderung der Lichtintensität bei verschiedenen Polarisationswinkeln des polarisierten Lichtes. Dokument "Quantitative Orientation analysis" verfügbar auf https://web.archive.org/web/20160314225552if_/http://bigwww.epfl.ch/demo/orientation/theoreticl-background.pdf bietet ein mathematisches Verfahren zur Charakterisierung der Orientierung und Isotropie einer Region in einem Bild. Dokument US2005/0211599 A1 beschreibt ein Produkt zur Behandlung von Haar zusammen mit Informationen über das Aussehen des Haares nach der Anwendung des Produkts.

Es besteht somit ein Bedarf an einer quantitativen Bewertung einer Glätte von Haar, beispielsweise einer Frisur. Wünschenswert wäre dabei ferner eine einfache Anwendbarkeit ohne oder mit nur geringem apparativem Aufwand, so dass die Glätte des Haars beispielsweise auch von einem Nutzer ermittelt werden kann.

In verschiedenen Ausführungsbeispielen wird ein Verfahren gemäß Ansprüche 1 bis 13 bereitgestellt, welches es ermöglicht, eine Glätte von Frisuren präzise als Zielparameter eines Bildverarbeitungsverfahrens (für Bildverarbeitung ist im Deutschen auch der englische Begriff "Image Analysis" gebräuchlich) zu bestimmen, z.B. zu ermitteln.

In verschiedenen Ausführungsbeispielen kann das Verfahren mit nur geringem oder ohne apparativen Aufwand ausführbar sein. Beispielsweise kann das Verfahren mittels einer App auf einem Tablet oder einem Smartphone ausführbar sein. Das kann es einem Nutzer beispielsweise ermöglichen, auch ohne professionelle Unterstützung und ohne eine Haarprobe für eine Manipulation bereitstellen zu müssen, den Glättewert seiner Frisur zu bestimmen, beispielsweise unter Verwendung eines Smartphones oder Tablets zum Aufnehmen eines digitalen Bildes der Frisur und eines Ermittelns des Glättewerts mittels des Smartphones/Tablets, wobei das Smartphone/Tablet in verschiedenen Ausführungsbeispielen genutzt werden kann, um das Bild einer externen Datenverarbeitungsvorrichtung, z.B. einer Cloud, bereitzustellen und die dort ermittelten Ergebnisse zu empfangen und dem Nutzer anzuzeigen.

In verschiedenen Ausführungsbeispielen wird ein Verfahren zum Ermitteln eines Glättewerts einer Frisur bereitgestellt. Das Verfahren kann aufweisen ein Ermitteln und/oder Festlegen mindestens eines Haaruntersuchungsbereichs in einem digitalen Bild, in welchem Haare abgebildet sind, ein Ermitteln von Haarverläufen der im mindestens einen Haaruntersuchungsbereich abgebildeten Haare, wobei die Haarverläufe aller im Haaruntersuchungsbereich abgebildeten Haare eine Gesamtheit der Haarverläufe bilden, ein Ermitteln einer Hauptrichtung der Haarverläufe und ein Ermitteln des Glättewertes der Frisur basierend auf der Hauptrichtung der Haarverläufe und der Gesamtheit der Haarverläufe.

In verschiedenen Ausführungsbeispielen wird das Ermitteln des Glättewertes der Frisur basierend auf der Hauptrichtung der Haarverläufe und der Gesamtheit der Haarverläufe ein Ermitteln einer Kohärenz unter Verwendung eines Strukturtensors und/oder ein Ermitteln einer Dispersion einer Winkelverteilung der Gesamtheit der Haarverläufe aufweisen.

In verschiedenen Ausführungsbeispielen wird das Ermitteln oder Festlegen mindestens eines Haaruntersuchungsbereichs ein Festlegen des mindestens einen Haaruntersuchungsbereichs durch einen Nutzer aufweisen.

In verschiedenen Ausführungsbeispielen wird das Festlegen des mindestens einen Haaruntersuchungsbereichs durch den Nutzer ein Festlegen von Position und/oder Form und/oder Größe des Haaruntersuchungsbereichs aufweisen.

In verschiedenen Ausführungsbeispielen wird das Ermitteln oder Festlegen mindestens eines Haaruntersuchungsbereichs ein Ermitteln eines Haardarstellungsbereichs, in welchem die Haare im digitalen Bild abgebildet sind, und ein Festlegen zumindest eines Teils des Haardarstellungsbereichs als den mindestens einen Haaruntersuchungsbereich aufweisen.

In verschiedenen Ausführungsbeispielen wird der mindestens eine Haaruntersuchungsbereich den gesamten Haardarstellungsbereich aufweisen.

In verschiedenen Ausführungsbeispielen wird der mindestens eine Haaruntersuchungsbereich eine Mehrzahl von Haaruntersuchungsbereichen aufweisen.

In verschiedenen Ausführungsbeispielen wir die Mehrzahl von Haaruntersuchungsbereichen sich voneinander in ihrer Mittelpunktposition unterscheiden.

In verschiedenen Ausführungsbeispielen wird die Mehrzahl von Haaruntersuchungsbereichen sich voneinander in ihrer Größe unterscheiden.

In verschiedenen Ausführungsbeispielen wird die Mehrzahl von Haaruntersuchungsbereichen eine gemeinsame Mittelpunktposition aufweisen.

In verschiedenen Ausführungsbeispielen wird das Verfahren ferner ein Inbeziehungsetzen der ermittelten Glättewerte der Frisur zu den Mittelpunktpositionen der Haaruntersuchungsbereiche aufweisen.

In verschiedenen Ausführungsbeispielen wird das Verfahren ferner ein Inbeziehungsetzen der ermittelten Glättewerte der Frisur zu den Größen der Haaruntersuchungsbereiche aufweisen.

In verschiedenen Ausführungsbeispielen wird das Verfahren ferner ein Darstellen des ermittelten Ergebnisses aufweisen.

In verschiedenen Ausführungsbeispielen wird eine Vorrichtung zum Ermitteln einer Glätte von Frisuren bereitgestellt. Die Vorrichtung kann eine Datenverarbeitungsvorrichtung und eine Anzeigevorrichtung aufweisen, wobei die Datenverarbeitungsvorrichtung eingerichtet sein kann, eines der obigen Verfahren auszuführen.

Ausführungsbeispiele der Erfindung sind in den Figuren dargestellt und werden im Folgenden näher erläutert.

Es zeigen

Figuren 1A und 1B Bilder von unterschiedlich glatten Haaren zur Verwendung bei einem Verfahren zum Ermitteln eines Glättewerts einer Frisur gemäß verschiedenen Ausführungsbeispielen;

Figuren 2A und 2B graphische Darstellungen von Ergebnissen des Verfahrens zum Ermitteln eines Glättewerts einer Frisur gemäß verschiedenen Ausführungsbeispielen;

Figuren 3A und 3B Tabellen mit Ergebnissen des Verfahrens zum Ermitteln eines Glättewerts einer Frisur gemäß verschiedenen Ausführungsbeispielen;

Figur 4A und Figur 4B jeweils eine graphische Darstellung zur Veranschaulichung eines Verfahrens zum Ermitteln eines Glättewerts einer Frisur gemäß verschiedenen Ausführungsbeispielen;

Figuren 4C bis 4H Bilder von unterschiedlich glatten Haaren zur Verwendung bei einem Verfahren zum Ermitteln eines Glättewerts einer Frisur gemäß verschiedenen Ausführungsbeispielen;

Figur 5 ein Flussdiagramm eines Verfahrens zum Ermitteln eines Glättewerts einer Frisur gemäß verschiedenen Ausführungsbeispielen; und

Figur 6 eine graphische Darstellung einer Vorrichtung zum Ermitteln eines Glättewerts einer Frisur gemäß verschiedenen Ausführungsbeispielen.

In der folgenden ausführlichen Beschreibung wird auf die beigefügten Zeichnungen Bezug genommen, die Teil der vorliegenden Anmeldung bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Unter einem digitalen Bild kann hierin ein Datenpaket verstanden werden, welches von einem Datenverarbeitungssystem als zweidimensionale (flächige) Anordnung von Bildpunkten (auch als Pixel bezeichnet) darstellbar ist, beispielsweise in einem Koordinatensystem, welches eine x-Achse und eine y-Achse aufweist, wobei jeder Bildpunkt zumindest eine Bildposition als x,y-Koordinatenpaar und eine Intensitätsinformation aufweist, wobei die Intensitätsinformation beispielsweise als Farbe eines Pixels eines Monitors oder eines gedruckten Punktes eines ausgedruckten Bilds darstellbar ist. Die Intensitätsinformation kann sich bei einem Farbbild auf einzelne Farbkanäle beziehen. Das digitale Bild kann beispielsweise ein mit einer Digitalkamera aufgenommenes Foto oder ein Einzelbild einer mit einer digitalen Kamera aufgenommenen Videosequenz sein.

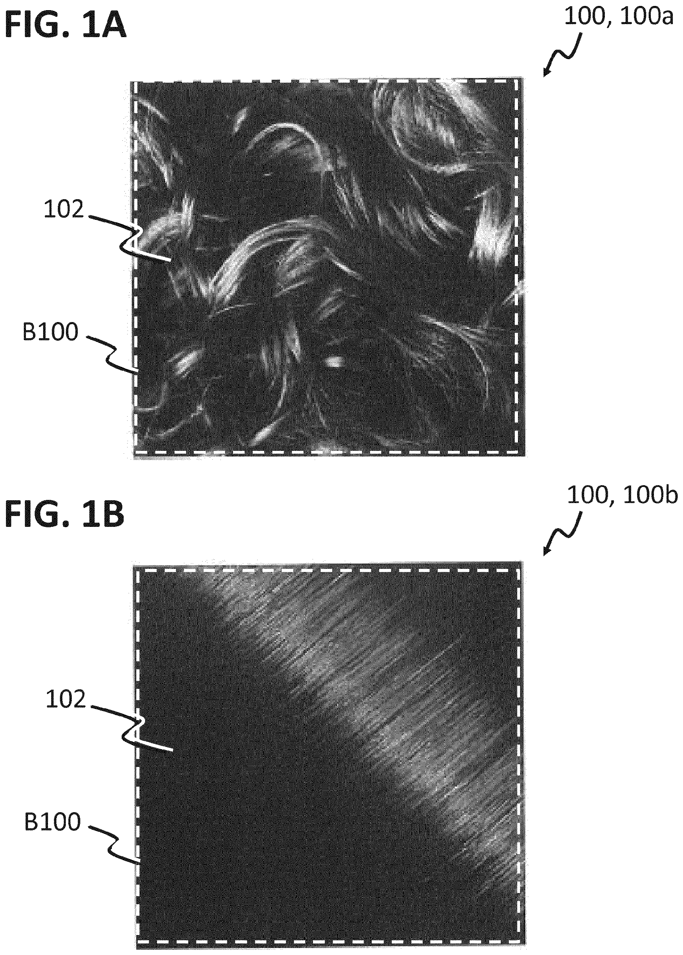

FIG. 1A und FIG. 1B zeigen Bilder 100 von unterschiedlich glatten Haaren zur Verwendung bei einem Verfahren zum Ermitteln einer Glätte von Frisuren gemäß verschiedenen Ausführungsbeispielen.

FIG. 1A zeigt eine Abbildung eines digitalen Bildes 100a von lockigem Haar 102, FIG. 1B eine Abbildung eines digitalen Bildes 100b von glattem Haar 102.

Um einen dem Betrachter unmittelbar ersichtlichen Unterschied in der Glätte des Haars von FIG. 1A und von FIG. 1B zu quantifizieren, kann in verschiedenen Ausführungsbeispielen auf jedes der Bilder ein Bildverarbeitungsverfahren angewendet werden.

Zunächst sei das Verfahren anhand von FIG. 1A erläutert.

Um das Verfahren zum Ermitteln einer Glätte von Frisuren gemäß verschiedenen Ausführungsbeispielen anwenden zu können, kann das Bild 100a, welches das (in diesem Fall lockige) Haar 102 zeigt, digital bereitgestellt sein. Das digitale Bild 100a kann beispielsweise einer Datenverarbeitungsvorrichtung bereitgestellt sein.

In verschiedenen Ausführungsbeispielen wird in dem Bild 100a mindestens ein Haaruntersuchungsbereich B100 bestimmt In den in FIG. 1A und FIG. 1B dargestellten Ausführungsbeispielen weist der Haaruntersuchungsbereich B100 im Wesentlichen den gesamten Bereich des digitalen Bildes 100, 100a, 100b auf und ist rechteckig, z.B. quadratisch, geformt.

In verschiedenen Ausführungsbeispielen kann der Haaruntersuchungsbereich B100 einen Teilbereich des Haardarstellungsbereichs aufweisen.

In verschiedenen Ausführungsbeispielen kann das digitale Bild 100 zusätzlich zu dem Haardarstellungsbereich noch weitere Darstellungsbereiche aufweisen, in welchen beispielsweise Objekte, Körperteile, usw. dargestellt sein können. Der Haaruntersuchungsbereich B100 kann in verschiedenen Ausführungsbeispielen so gewählt sein, dass kein Teil der sonstigen Darstellungsbereiche in den Haaruntersuchungsbereich B100 fällt.

In verschiedenen Ausführungsbeispielen kann der Haaruntersuchungsbereich B100 eine beliebige Form haben, beispielsweise kann der Haaruntersuchungsbereich B100, abgesehen von rechteckig, auch dreieckig, polygonal mit einer anderen Eckenzahl als drei oder vier, elliptisch, rund oder beliebig geformt sein. Beispielsweise kann der Haaruntersuchungsbereich B100 den gesamten im digitalen Bild 100 dargestellten Bereich aufweisen, in welchem Haar 102 (z.B. Haupthaar, also beispielsweise ohne Augenbrauen, Bart, usw.) abgebildet ist (auch als Haardarstellungsbereich bezeichnet. Der Haardarstellungsbereich kann eine Mehrzahl von Bildpunkten eines digitalen Bildes 100 aufweisen, welche das Haar 102 abbilden und welche eine zusammenhängende oder aus einer Mehrzahl von Einzelflächen bestehende Fläche bilden können. Eine Ebene, in welcher der Haarbereich angeordnet sein kann, kann beispielsweise durch die x-Achse und die y-Achse des digitalen Bildes bestimmt sein.

In verschiedenen Ausführungsbeispielen, in welchen der Haaruntersuchungsbereich B100 den gesamten Haardarstellungsbereich aufweist, kann folglich der Haaruntersuchungsbereich B100 eine ein- oder mehrteilige Fläche aufweisen, welche für eine nachfolgende Analyse, z.B. für ein Ermitteln eines Werts für einen Anteil linearer Bereiche und/oder für eine Verteilung linearer Bereiche, auch im Fall der mehrteiligen Fläche als ein einziger Haaruntersuchungsbereich B100 untersucht werden kann.

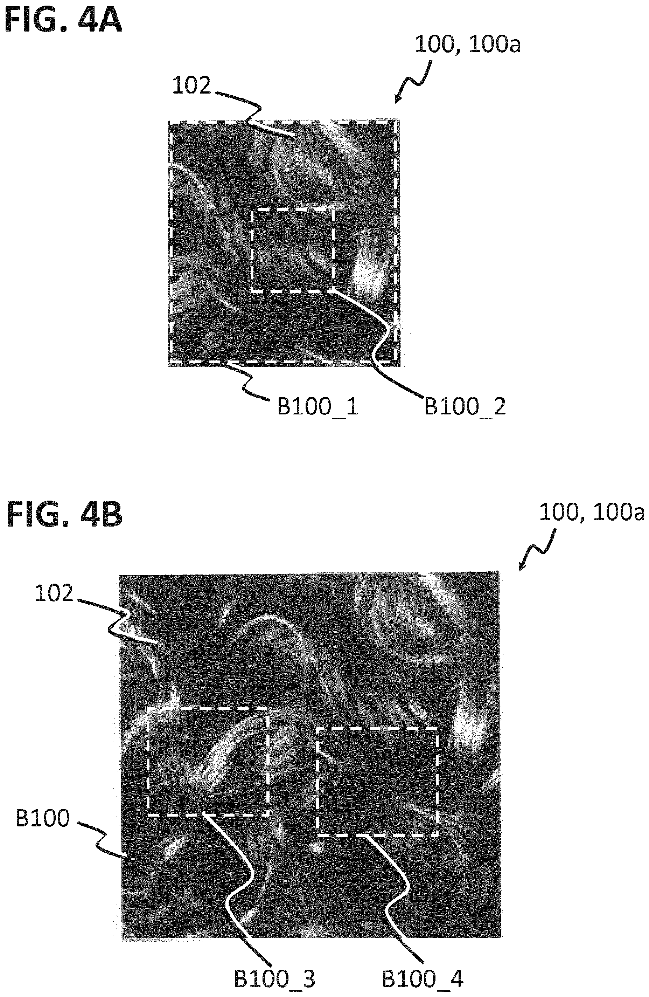

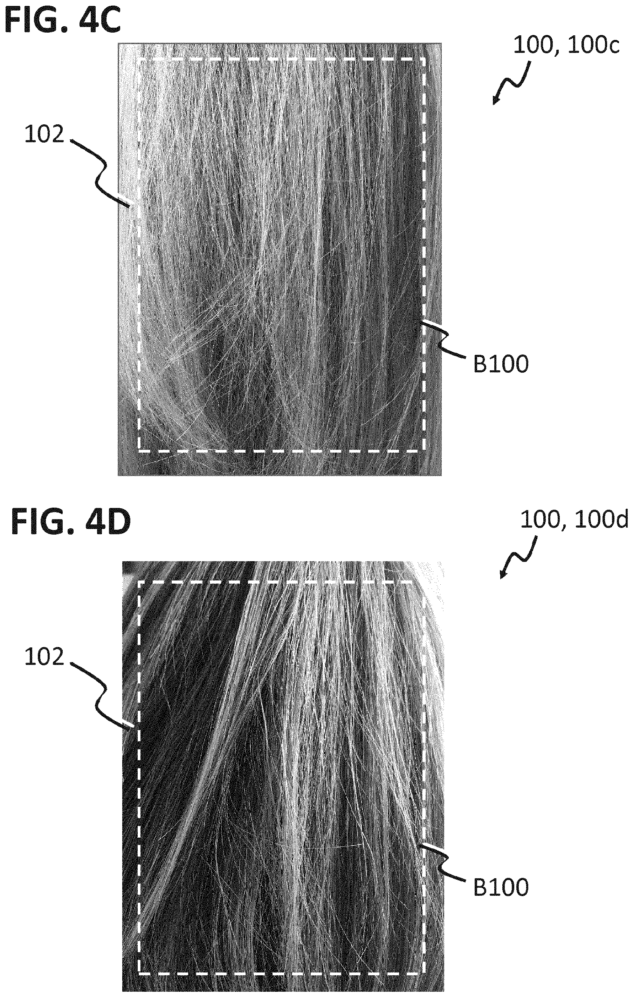

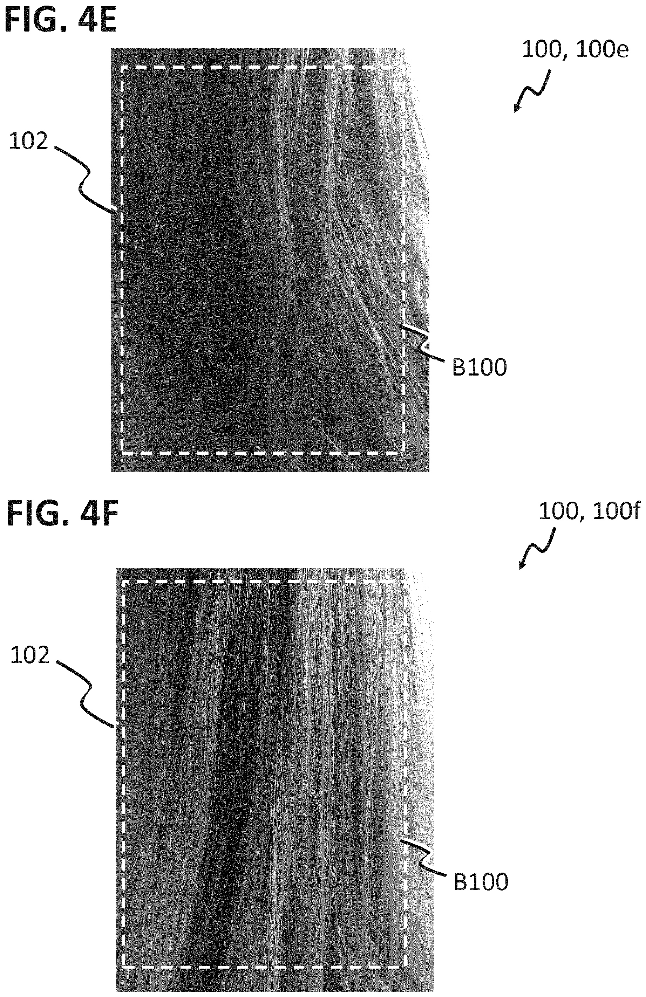

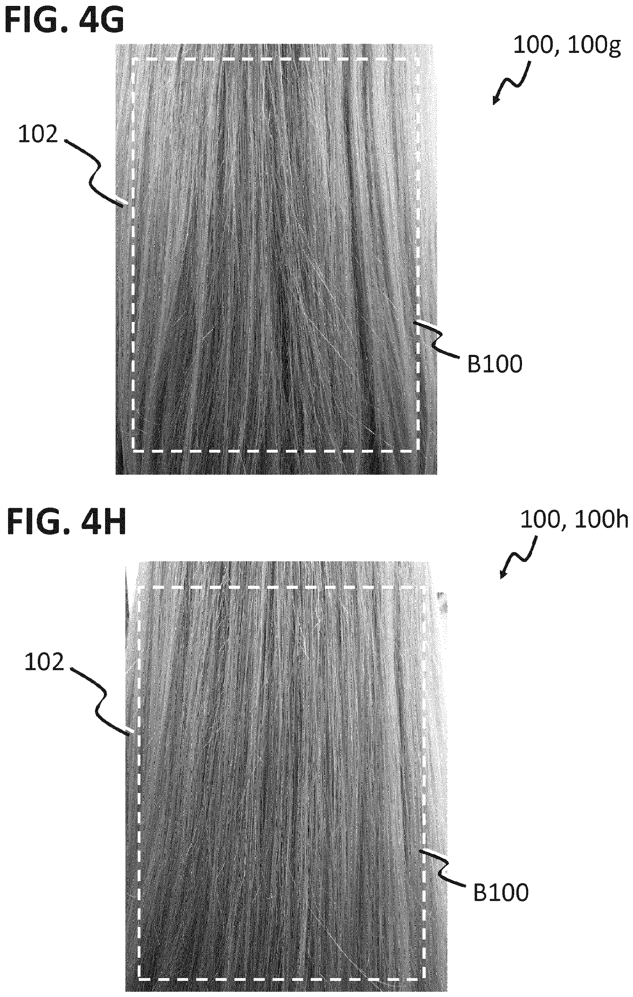

In verschiedenen Ausführungsbeispielen kann der mindestens eine Haaruntersuchungsbereich B100 eine Mehrzahl von Haaruntersuchungsbereichen B100 aufweisen, siehe z.B. in FIG. 4A die Haaruntersuchungsbereiche B100_1, B100_2 bzw. in FIG. 4B die Haaruntersuchungsbereiche B100_3, B100_4. In verschiedenen Ausführungsbeispielen kann bei einer nachfolgenden Analyse, z.B. beim Ermitteln eines Werts für einen Anteil linearer Bereiche und/oder für eine Verteilung linearer Bereiche, jeder der Mehrzahl von Haaruntersuchungsbereichen B100_1, B100_2 bzw. B100_3, B100_4, getrennt untersucht werden, d.h. für jeden der Mehrzahl von Haaruntersuchungsbereichen B100_1, B100_2 bzw. B100_3, B100_4 kann der Wert für einen Anteil linearer Bereiche und/oder für eine Verteilung linearer Bereiche separat ermittelt werden.

In verschiedenen Ausführungsbeispielen kann das Bestimmen des mindestens einen Haaruntersuchungsbereichs B100 das Ermitteln des Haardarstellungsbereichs und ein Festlegen des mindestens einen Haaruntersuchungsbereichs B100 aufweisen. Beispielsweise kann das Festlegen des mindestens einen Haaruntersuchungsbereichs B100 bedeuten, dass, wie oben beschrieben, der gesamte Haardarstellungsbereich als der Haaruntersuchungsbereich B100 festgelegt wird, und/oder ein- oder mehrere Haaruntersuchungsbereich/e B100 können, beispielsweise automatisiert mittels der Datenverarbeitungsvorrichtung, z.B. unter Einbeziehung vorbestimmter Bedingungen, festgelegt werden.

Beispielsweise kann eine Größe und/oder Anzahl der Haaruntersuchungsbereiche B100 vorgegeben werden, z.B. mittels eines Nutzers, und die Haaruntersuchungsbereiche B100 können dann automatisiert, z.B. mittels einer geeigneten Software, festgelegt werden, beispielsweise so, dass zwischen den Haaruntersuchungsbereichen B100 gewahrt bleibt, dass der Haardarstellungsbereich möglichst gleichmäßig abgedeckt wird, o.ä.

In verschiedenen Ausführungsbeispielen werden für den mindestens einen Haaruntersuchungsbereich B100 Haarverläufe der darin abgebildeten Haare 102 ermittelt wobei die Haarverläufe aller im Haaruntersuchungsbereich abgebildeten Haare eine Gesamtheit der Haarverläufe bilden

In verschiedenen Ausführungsbeispielen kann für eine Ermittlung der Haarverläufe eine Kantenerkennung im Haaruntersuchungsbereich B100, in welchem Bildpunkte an einer durch Bildkoordinaten x, y bestimmten Stelle einen jeweils zugeordneten Intensitätswert aufweisen, durchgeführt werden. Für die Kantenerkennung, bei der Bereiche erkannt werden, bei denen entlang einer betrachteten Richtung im Haaruntersuchungsbereich für die entlang dieser Richtung angeordneten Bildpunkte der jeweilige zugeordneter Intensitätswert stark (z.B. stärker als ein vorgegebener Grenzwert) abfällt oder ansteigt, können bekannte Verfahren, beispielsweise unter Verwendung einer ersten Ableitung der positionsabhängigen Intensitätswerte, angewendet werden. Bei Betrachten der einen Richtung kann es möglich sein, Kanten zu ermitteln, die unter einen Winkel zur betrachteten Richtung verlaufen, z.B. senkrecht dazu. Mittels Betrachtens verschiedener Richtungen können die Haarverläufe der Haare 102 im Haaruntersuchungsbereich B100 in verschiedenen Richtungen ermittelt werden.

Für eine Beschreibung der Haarverläufe können in verschiedenen Ausführungsbeispielen die folgenden Gleichungen genutzt werden:

Ein gewichtetes inneres Produkt zweier jeweils von den Bildkoordinaten x, y abhängigen Funktionen f, g kann dargestellt werden durch:

$$\langle f, g \rangle_w \iint_{R^2} w(x,y) f(x,y) g(x,y) dx dy$$

wobei $w(x,y) \geq 0$ eine Wichtungsfunktion ist, die den Haaruntersuchungsbereich B100 beschreibt. Der Mittelpunkt des Haaruntersuchungsbereichs kann bei $(x_0, y_0)$ liegen.

Die erste Ableitung in einer angegebenen Richtung θ, welche durch einen Einheitsvektor $u_\theta = (\cos\theta, \sin\theta)$ beschrieben ist, kann dann beschrieben werden durch

$$D_{u_\theta} f(x,y) = \boldsymbol{u_\theta^T} \nabla f(x,y), \qquad (1)$$

wobei $\nabla f(x,y)$ der Gradient des betrachteten Bildes ist.

Eine Richtung $u_{\theta_{max}}$, für welche die Richtungsableitung maximiert ist, kann ermittelt werden durch

$$u_{\theta_{max}} = \arg\max_{\|u=1\|} \|D_u f\|_w^2, \qquad (2)$$

was umgeformt werden kann zu

$$\|D_u f\|_w^2 = \langle \boldsymbol{u^T} \nabla f, \nabla f^T \boldsymbol{u} \rangle_w = \boldsymbol{u^T J u}$$

wobei

$$J = \langle \nabla f, \nabla f^T \rangle_w = \begin{bmatrix} \langle f_x, f_x \rangle_w & \langle f_x, f_y \rangle_w \\ \langle f_x, f_y \rangle_w & \langle f_y, f_y \rangle_w \end{bmatrix}$$

ein so genannter Strukturtensor ist, der eine positiv definite bzw. definierte 2x2-Matrix ist.

Eine Lösung zu Gleichung (2) kann ermittelt werden, indem eine erste Ableitung von $u^T J u + 1 - \frac{1}{2} \boldsymbol{u^T u}$ nach u gleich Null gesetzt wird, was zur Eigenvektorgleichung führt: $Ju = \lambda u$.

Somit ergibt sich ein Eigenwert $\lambda_{min}$ von J, bei welchem die erste Ableitung minimiert sein kann, d.h. die wenigsten Kanten angetroffen werden können, was anschaulich einer Hauptrichtung $\theta_H$ des Haaruntersuchungsbereichs B100 entsprechen kann, d.h. einer Richtung, entlang der die einzelnen Haare 102 im Haaruntersuchungsbereich B100 bevorzugt verlaufen können, aus $\lambda_{min} = \min \|D_u f\|_w^2$. Ein maximierter Eigenwert $\lambda_{max}$ von J gibt eine zur Hauptrichtung senkrechte Richtung an.

Für die Ermittlung des Glättewerts kann die Hauptrichtung $\theta_H$, auch als Orientierung bezeichnet, bestimmt werden aus

$$\theta_H = \frac{1}{2} arctan\left(2\frac{\langle f_x, f_y\rangle_w}{\langle f_y, f_y\rangle_w - \langle f_x, f_x\rangle_w}\right) + 90 \qquad (3)$$

Obwohl ein Wert der Hauptrichtung $\theta_H$ für sich genommen in verschiedenen Ausführungsbeispielen möglicherweise nicht relevant ist, weil er beispielsweise davon abhängig ist, wie die Frisur (bzw. die Haare 102) bezüglich den x- und y-Koordinaten angeordnet sind, sei erwähnt, dass bei einer üblichen Zählweise 0° nach Osten/rechts weisen und ein Winkel gegen den Uhrzeigersinn gezählt wird.

Eine Kohärenz, kann anschaulich beschrieben ein Maß dafür darstellen, wie stark eine Dominanz der Hauptrichtung ist (beispielsweise kann die Kohärenz 1 sein, wenn eine abgebildete Mehrzahl einzelner Strukturen (hier: einzelner Haare) eine dominante Hauptrichtung aufweist, und 0 in einem Fall einer isotropen Verteilung der Mehrzahl der einzelnen Strukturen (z.B. der einzelnen Haare). Die Kohärenz C kann ermittelt werden aus:

$$C = \frac{\lambda_{max} - \lambda_{min}}{\lambda_{max} + \lambda_{min}} = \frac{\sqrt{\left(\langle f_y, f_y\rangle_w - \langle f_x, f_x\rangle_w\right)^2 + 4\langle f_x, f_y\rangle_w}}{\langle f_x, f_x\rangle_w + \langle f_y, f_y\rangle_w}, C \in [0\dots1]$$

Das bedeutet, dass bei glatten Haaren, die im Wesentlichen parallel zueinander verlaufen können, wie beispielsweise in FIG. 1B dargestellt, und/oder bei denen die Verläufe der einzelnen Haare nur geringe Winkelunterschiede zueinander aufweisen, beispielsweise weniger als 30°, z.B. weniger als 20°, z.B. weniger als 10°, z.B. weniger als 5°, einen hohen Kohärenzwert aufweisen können, beispielsweise größer als 0,5, z.B. größer als 0,6, z.B. größer als 0,7, z.B. größer als 0,8, z.B. größer als 0,9, z.B. nahe 1, wohingegen lockige Haare, wie beispielsweise in FIG. 1A dargestellt, und/oder bei denen die Verläufe der einzelnen Haare große Winkelunterschiede zueinander aufweisen, beispielsweise mehr als 40°, z.B. mehr als 50°, z.B. mehr als 75°, z.B. nahe 90°, einen niedrigen Kohärenzwert aufweisen können, beispielsweise kleiner als 0,5, z.B. kleiner als 0,4, z.B. kleiner als 0,3, z.B. kleiner als 0,2, z.B. kleiner als 0,1, z.B. nahe 0.

Somit wird in verschiedenen Ausführungsbeispielen die ermittelte Kohärenz, die die Gesamtheit der Haarverläufe in Beziehung setzen kann zur Hauptrichtung der Haarverläufe, genutzt als der Glättewert der Frisur. Der Glättewert Kohärenz kann ein quantitatives Maß für die Glätte der Frisur bilden. In verschiedenen Ausführungsbeispielen, bei welchen die Frisur vollständig im digitalen Bild 100 abgebildet sein kann, und der Haaruntersuchungsbereich B100 die gesamte Frisur aufweist, kann die Kohärenz des einen Haaruntersuchungsbereichs B100 somit dem Glättewert für die gesamte Frisur entsprechen. In verschiedenen Ausführungsbeispielen, bei welchen die Frisur möglicherweise nur teilweise im digitalen Bild 100 ist und/oder der mindestens eine Haaruntersuchungsbereich B100 nicht die gesamte Frisur aufweist, kann die Kohärenz des mindestens einen Haaruntersuchungsbereichs B100 einem Glättewert für die Frisur entsprechen, der nur für den mindestens Haaruntersuchungsbereich B100 repräsentativ ist. In verschiedenen Ausführungsbeispielen kann eine Mehrzahl von Haaruntersuchungsbereichen B100 ausgewertet werden, um eine Glätte der gesamten Frisur anhand einer Mehrzahl von dadurch ermittelten Glättewerten zu bewerten.

Anschaulich beschrieben kann in den obigen verschiedenen Ausführungsbeispielen für jeden der Bildpunkte im mindestens einen Haaruntersuchungsbereich B100 ermittelt werden, in welche Richtung (z.B. unter welchem Winkel) eine dort abgebildete Struktur (d.h. Haar 102) verläuft, aus diesen Richtungen eine Hauptrichtung (auch als Orientierung oder vorherrschende Ausrichtung bezeichnet) ermittelt werden, und dann, als ein Maß für die Glätte der Haare 102, ermittelt werden, welchem Anteil der Bildpunkte aus der Gesamtzahl der Bildpunkte ungefähr die Hauptrichtung zugeordnet ist, wobei das Maß, als Kohärenz ausgedrückt, so normiert sein kann, dass sich für eine isotrope Verteilung eine Kohärenz von 0 ergibt und für eine Ausrichtung aller oder im Wesentlichen aller Bildpunkte entlang der Hauptrichtung eine Kohärenz von 1 ergibt.

Bei einer Verwendung der Kohärenz als Maß für die Glätte der Haare 102 wird in verschiedenen Ausführungsbeispielen, wie oben beschrieben, der Strukturtensor ermittelt, der für jedes Pixel des Bildes 100 definiert wird. Aus einer Gesamtheit der Strukturtensoren wird in verschiedenen Ausführungsbeispielen die Kohärenz abgeleitet.

In verschiedenen Ausführungsbeispielen kann die Kohärenz als ein Maß für lineare Anteile im Bild darstellen.

In verschiedenen Ausführungsbeispielen kann zum Ermitteln der Hauptrichtung $\theta_H$ eine Fourierkomponentenanalyse durchgeführt werden. Dieser kann eine Fourier-Spektralanalyse zugrunde liegen. Dabei können Strukturen mit einer Hauptrichtung in einem beispielsweise rechteckigen Bild in der Fouriertransformierten des Bildes ein periodisches Muster eine einer um +90° gegenüber der Hauptrichtung der Strukturen versetzten zweiten Richtung erzeugen.

In verschiedenen Ausführungsbeispielen kann der Haaruntersuchungsbereich B100 aufgeteilt werden in z.B. rechteckige Haaruntersuchungsbereichsabschnitte, für die jeweils ein Fourier-Leistungsspektrum berechnet werden kann. Die Leistungsspektren können in Polarkoordinaten untersucht werden, und die Leistung kann für jeden Winkel (d.h. jede Richtung) unter Verwendung von räumlichen Filtern gemessen werden.

Die für jeden der einzelnen Bildpunkte ermittelten Winkel können als Winkel-Häufigkeitsverteilung darstellbar sein. An die Winkel-Häufigkeitsverteilung kann in verschiedenen Ausführungsbeispielen eine Verteilungsfunktion, z.B. eine Gaußkurve, angepasst werden, deren Mittelpunkt die Hauptrichtung $\theta_H$ angeben kann.

Als der Glättewert der Frisur können in verschiedenen Ausführungsbeispielen Zuverlässigkeitsbereiche der Verteilungsfunktion verwendet werden. Beispielsweise kann eine Standardabweichung der Gaußkurve den Glättewert bilden. Dabei handelt es sich wieder um zirkuläre Daten, d.h. als Maß für eine Streuung kann eine Winkelabweichung geeignet sein.

Für die oben beschriebenen Berechnungen kann in verschiedenen Ausführungsbeispielen eine Software genutzt werden. Dabei kann jede Software genutzt werden, die eine oben beschriebene Funktionalität bereitstellt. In verschiedenen Ausführungsbeispielen, z.B. in einem Fall, dass zum Ausführen des Verfahrens zum Ermitteln eines Glättewerts einer Frisur ein Smartphone oder ein Tablet genutzt wird, kann die Software als eine App bereitgestellt sein.

Im Folgenden wird eine beispielhafte Verwendung eines bekannten Softwarepakets "ImageJ" (http://imagej.net) beschrieben, welches verschiedene Plug-Ins bereitstellt, die unter anderem entwickelt wurden für eine Analyse fibrillärer Zellstrukturen wie z.B. Kollagenfasern und für ein Ermitteln der Hauptrichtung $\theta_H$ und des Glättewerts geeignet sein können.

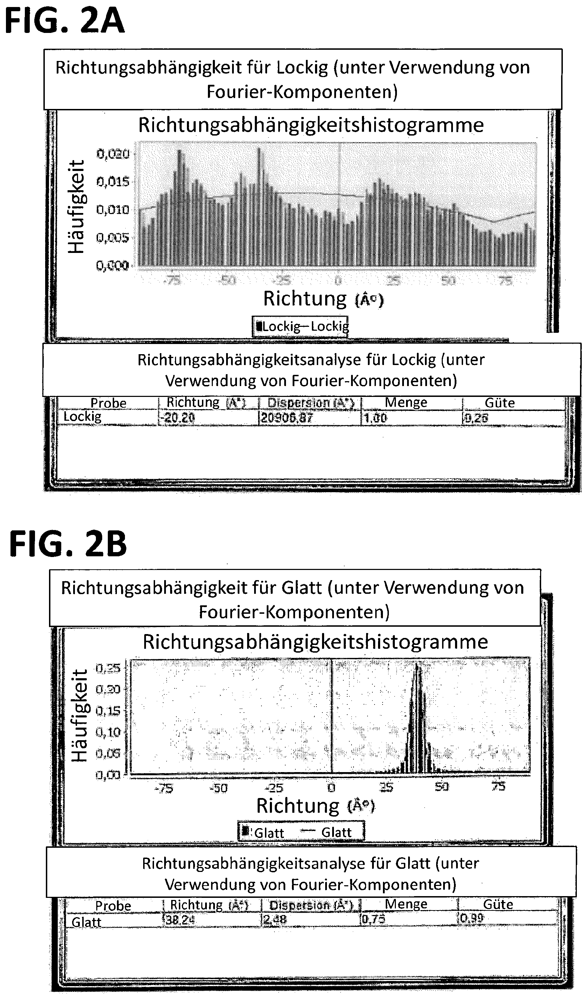

In FIG. 2A und FIG. 2B sind Ergebnisse einer Anwendung des Plug-Ins "Directionality" (siehe http://imagej.net/Directionality für eine detaillierte Beschreibung) gemäß verschiedenen Ausführungsbeispielen auf das lockige Haar aus FIG. 1A (in FIG. 2A) und auf das glatte Haar aus FIG. 1B (in FIG. 2B) graphisch dargestellt.

Die Bilder 100a, 100b und die darin festgelegten Haaruntersuchungsbereiche, die jeweils das gesamte Bild aufweisen, haben eine Auflösung von 700 x 700 Bildpunkten, und bei beiden Bildern liegen vergleichbare Farben und Kontraste vor.

In FIG. 2A ist im oberen Fenster eine Häufigkeitsverteilung der den einzelnen Bildelementen im Haaruntersuchungsbereich B100 (hier im Wesentlichen der gesamte Bildbereich) in Form eines Säulendiagramms dargestellt als Zahl der Bildelemente (z.B. als relative Häufigkeit) in Abhängigkeit des Winkels (Richtung in Grad). Außerdem dargestellt ist eine daran angepasste Gaußkurve (als durchgezogene Linie).

Wie anhand der FIG. 2A ersichtlich ist, weist die Häufigkeitsverteilung des Bildes 100a mit dem lockigen Haar 102 eine Verteilung auf, die sich über sämtliche Winkel verteilt und die lediglich etwa drei sehr breite Häufigkeitsmaxima aufweist.

In einem unteren Fenster von FIG. 2A sind errechnete Ergebnisse wiedergegeben, welche die anhand des Mittelpunkts der angepassten Gaußkurve ermittelte Hauptrichtung $\theta_H$ ("Richtung"), eine Standardabweichung der Gaußkurve ("Dispersion"), eine Menge, welche eine innerhalb der Standardabweichung aufsummierte Häufigkeit angibt, und eine Qualität der Gaußkurvenanpassung auflisten.

Die Ergebnisse zeigen, dass für das lockige Haar 102 aus FIG. 1A keine sinnvolle Anpassung erzielt und die Güte der Anpassung mit einem niedrigen Wert von 0,25 bewertet wird. Denn weder fällt die Richtung (von $\theta_H$ = -20,20°) mit einem der Häufigkeitsmaxima (die bei etwa -70°, etwa -35° und etwa 20° liegen) zusammen, noch wird ein sinnvoller Wert für die Dispersion ermittelt (der ermittelte Wert von 20906,87° ist um ein vielfaches breiter als die Häufigkeitsverteilung, die sich von -90° bis +90° erstreckt). Angesichts der sehr breiten Dispersion ist verständlich, dass die Menge, die somit über den gesamten Winkelbereich aufsummiert wird, bei 1,00 (also 100% der Bildelemente) liegt.

Dementsprechend spiegeln die ermittelten Werte, insbesondere die als Glättewert herangezogene Dispersion, wider, dass das im Haaruntersuchungsbereich B100 dargestellte Haar 102 nicht glatt ist.

Demgegenüber zeigen die in FIG. 2B dargestellten Ergebnisse für das glatte Haar 102 aus FIG. 1B im oberen Fenster eine stark auf einen Bereich zwischen etwa 30° und 50° konzentrierte Häufigkeitsverteilung, d.h. eine monomodale Verteilung, für die das Maximum einer angepassten Gaußkurve (die eine sehr gute Anpassungsgüte von 0,99 bei einer von 0 bis 1 reichenden Skala aufweist), wie im unteren Fenster angegeben ist, der ermittelten Hauptrichtung von $\theta_H$ = 38,24° entspricht.

Für die als Dispersion angegebene Standardabweichung ergibt sich ein sinnvoller Wert von 2,48°, und innerhalb eines Richtungsbereichs von (38,24°-2,48°) bis (38,24°+2,48°) liegen 75% der Bildelemente des Haaruntersuchungsbereichs B100.

Damit ist quantitativ als ein Glättewert, die Dispersion, wiedergegeben, dass die Haarverläufe im Bild aus FIG. 1B im Wesentlichen in derselben Richtung verlaufen, das Haar 102 somit glatt ist.

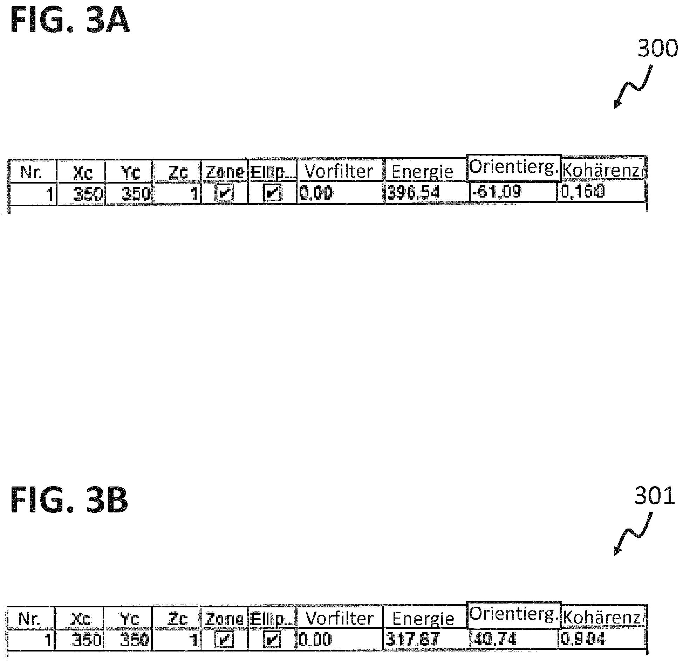

In FIG. 3A und FIG. 3B sind Tabellen mit Ergebnissen eines Verfahrens zum Ermitteln eines Glättewerts einer Frisur gemäß verschiedenen Ausführungsbeispielen dargestellt, für deren Ermittlung das oben beschriebene Verfahren, welches den Strukturtensor nutzt, angewendet wurde.

Als Software wurde hierbei das Plug-In "OrientationJ" (siehe http://bigwww.epfl.ch/demo/orientation für eine detaillierte Beschreibung) verwendet.

Dabei gibt FIG. 3A die Ergebnisse für das lockige Haar aus FIG. 1A wieder, und FIG. 3B die Ergebnisse für das glatte Haar aus FIG. 1B.

Für das lockige Haar wird eine Orientierung, d.h. eine Hauptrichtung $\theta_H$ = -61,09° ermittelt, und ferner eine Kohärenz von 0,160, was ein niedriger Wert ist, der deutlich näher an einer isotropen Verteilung (mit einem Kohärenzwert von 0) als an einer ausgeprägten Vorzugsrichtung (mit einem Kohärenzwert von 1) liegt.

Für das glatte Haar wird eine Orientierung, d.h. eine Hauptrichtung $\theta_H$ = 40,74° ermittelt, und ferner eine hohe Kohärenz von 0,904, was deutlich näher an einer Verteilung mit einer ausgeprägten Vorzugsrichtung als an einer isotropen Verteilung liegt.

Sowohl die Dispersion als auch die Kohärenz können in verschiedenen Ausführungsbeispielen geeignet sein, eine Differenzierung von Bildern mit Frisuren unterschiedlicher Glätte zu ermöglichen und die linearen Anteile der Frisur, die für eine Glätte der Frisur ausschlaggebend sein können, zu quantifizieren.

In verschiedenen Ausführungsbeispielen kann eine schnelle quantitative Analyse einer Wirksamkeit verschiedener Glättungsverfahren ermöglicht werden.

FIG. 4A und FIG. 4B zeigen jeweils eine graphische Darstellung zur Veranschaulichung eines Verfahrens zum Ermitteln eines Glättewerts einer Frisur gemäß verschiedenen Ausführungsbeispielen.

In verschiedenen Ausführungsbeispielen kann eine Mehrzahl unterschiedlich großer Haaruntersuchungsbereiche B100 verwendet werden.

In verschiedenen Ausführungsbeispielen kann das Verfahren ein Inbeziehungsetzen der ermittelten Glättewerte der Frisur zu den Größen der Mehrzahl von Haaruntersuchungsbereichen B100 (hier beispielsweise B100_1, B100_2) aufweisen.

In verschiedenen Ausführungsbeispielen kann die Mehrzahl unterschiedlich großer Haaruntersuchungsbereiche B100 dieselbe Mittelpunktposition aufweisen, d.h. die Haaruntersuchungsbereiche B100 können auf denselben Mittelpunkt zentriert sein.

In FIG. 4A sind im Bild 100a zwei verschieden große Haaruntersuchungsbereiche B100_1 und B100_2 dargestellt.

In verschiedenen Ausführungsbeispielen können die beiden Haaruntersuchungsbereiche B100_1, B100_2 getrennt voneinander untersucht werden.

Während der eine Haaruntersuchungsbereich B100_1 dem oben dargestellten Haaruntersuchungsbereich B100, der das gesamte Bild 100a aufweist, entsprechen kann, kann der andere Haaruntersuchungsbereich B100_2 kleiner sein.

In verschiedenen Ausführungsbeispielen kann die Mehrzahl verschieden großer Haaruntersuchungsbereiche B100_1, B100_2 genutzt werden, um einen Anhaltspunkt für eine Unterscheidung von lockigem Haar, welches für kleinere Haaruntersuchungsbereiche B100 eine Hauptrichtung mit kleiner Dispersion und/oder großer Kohärenz aufweisen kann, obwohl es für einen großen Haaruntersuchungsbereich B100 eine große Dispersion und/oder eine kleine Kohärenz aufweisen kann, und ungeordnetem Haar, welches beispielsweise für jede Größe des Haaruntersuchungsbereichs eine im Wesentlichen isotrope Verteilung mit einer kleinen Kohärenz und/oder einer großen Dispersion aufweisen kann, zu erhalten.

In verschiedenen Ausführungsbeispielen kann mittels einer Grenzgröße des Haaruntersuchungsbereichs B100, bei deren Unterschreiten ein vorgegebener Mindestwert für eine Kohärenz überschritten und/oder ein vorgegebener Maximalwert für eine Dispersion unterschritten wird, eine Größe der linearen (z.B. glatten) Strukturen ermittelt werden, beispielsweise als Zahl von Bildelementen, und/oder, beispielsweise bei einem Vorliegen einer Zuordnung einer Größe der Bildelemente zu einer physikalischen Größeneinheit, als physikalische Abmessungen, z.B. Zentimeter.

Wie anhand der FIG. 4A ersichtlich ist, kann der Haaruntersuchungsbereich B100_1, wie in FIG. 3A dargestellt, Haare 102 mit einer niedrigen Kohärenz und einer hohen Dispersion aufweisen, eine sinnvolle Angabe einer Hauptrichtung $\theta$ scheint nicht möglich zu sein.

Demgegenüber können im kleineren Haaruntersuchungsbereich B100_2 Haare dargestellt sein, die eine Hauptrichtung $\theta$ aufweisen, welche bei etwa -70° liegen kann, und darüber hinaus ist zu erwarten, dass die Kohärenz relativ hoch und die Dispersion relativ niedrig sein kann. Folglich können im kleineren Haaruntersuchungsbereich B100_2 glatte Haarstrukturen vorhanden sein, die eine Größe aufweisen, die in etwa einer Größe (beispielsweise einer Kantenlänge) des Haaruntersuchungsbereichs entspricht.

In verschiedenen Ausführungsbeispielen kann eine Mehrzahl unterschiedlich positionierter Haaruntersuchungsbereiche B100 verwendet werden, beispielsweise von Haaruntersuchungsbereichen B100_3, B100_4, welche unterschiedliche Mittelpunktpositionen aufweisen.

In verschiedenen Ausführungsbeispielen kann das Verfahren ein Inbeziehungsetzen der ermittelten Glättewerte der Frisur zu den Mittelpunktpositionen der Mehrzahl von Haaruntersuchungsbereichen B100 (hier beispielsweise B100_3, B100_4) aufweisen.

In verschiedenen Ausführungsbeispielen kann die Mehrzahl unterschiedlich positionierter Haaruntersuchungsbereiche B100 dieselbe Größe aufweisen.

In FIG. 4B sind im Bild 100b zwei verschieden positionierte Haaruntersuchungsbereiche B100_3 und B100_4 dargestellt.

In verschiedenen Ausführungsbeispielen können die beiden Haaruntersuchungsbereiche B100_3, B100_4 getrennt voneinander untersucht werden.

In verschiedenen Ausführungsbeispielen kann die Mehrzahl verschieden positionierter Haaruntersuchungsbereiche B100_3, B100_4 genutzt werden, um einen Anhaltspunkt für eine Verteilung von glattem und/oder lockigem Haar in einer Frisur zu erhalten. Beispielsweise können bei einer Frisur die Haare 102 nahe der Kopfhaut glatt sein, während die Haare nahe den Spitzen gelockt sein können.

Im in FIG. 4B dargestellten Beispiel kann der Haaruntersuchungsbereich B100_3 eine Hauptrichtung mit großer Dispersion und/oder kleiner Kohärenz aufweisen, wohingegen der Haaruntersuchungsbereich B100_4 eine kleine Dispersion und/oder eine kleine Kohärenz aufweisen kann.

Mittels der im Haardarstellungsbereich verteilt angeordneten Haaruntersuchungsbereiche B100 kann, beispielsweise in einem Fall, in welchem der Haardarstellungsbereich eine gesamte Frisur aufweist, glatte Bereiche im Haardarstellungsbereich identifizieren.

In verschiedenen Ausführungsbeispielen können mehrere der Haaruntersuchungsbereiche B100 gemittelt werden. Dies kann unter Verwendung von entsprechenden Verfahren der zirkulären Statistik erfolgen.

In verschiedenen Ausführungsbeispielen kann das Verfahren zum Bestimmen eines Glättewerts einer Frisur vor einem Anwenden eines Glättungsverfahrens, z.B. mittels eines Conditioners, einer Haarkur, einer Dauerwelle, eines Relaxers, eines Straighteners und/oder eines Glätteisens, ermittelt werden. Damit kann beispielsweise ermittelt werden, ob bzw. an welchen Stellen eine Behandlung des Haars notwendig sein könnte.

Alternativ oder zusätzlich kann in verschiedenen Ausführungsbeispielen der Glättewert nach dem Anwenden des Glättungsverfahrens ermittelt werden. Damit kann beispielsweise eine Wirksamkeit des Glättungsverfahrens ermittelt werden. Dafür kann in verschiedenen Ausführungsbeispielen ein Verhältnis des Glättewerts nach dem Glätten mit dem Glättewert vor dem Glätten ermittelt werden.

In verschiedenen Ausführungsbeispielen kann das Verfahren zum Bestimmen eines Glättewerts einer Frisur genutzt werden, um eine Wirksamkeit des Glättungsverfahrens zu ermitteln.

In verschiedenen Ausführungsbeispielen kann ein Smartphone, ein Tablet, ein Laptop, oder ähnliches geeignet sein, um das Verfahren zum Ermitteln des Glättewerts einer Frisur auszuführen. In verschiedenen Ausführungsbeispielen braucht die Software nicht auf dem Smartphone, dem Tablet, dem Laptop usw. hergestellt zu werden. Es kann beispielsweise ausreichend sein, wenn das Smartphone o.ä. durch das Internet mit einem Computer verbunden ist. In einem solchen Fall können die Berechnungen beispielsweise mittels des Computers ausgeführt werden, und das Ergebnis kann dem Smartphone/Tablet o.ä. bereitgestellt werden.

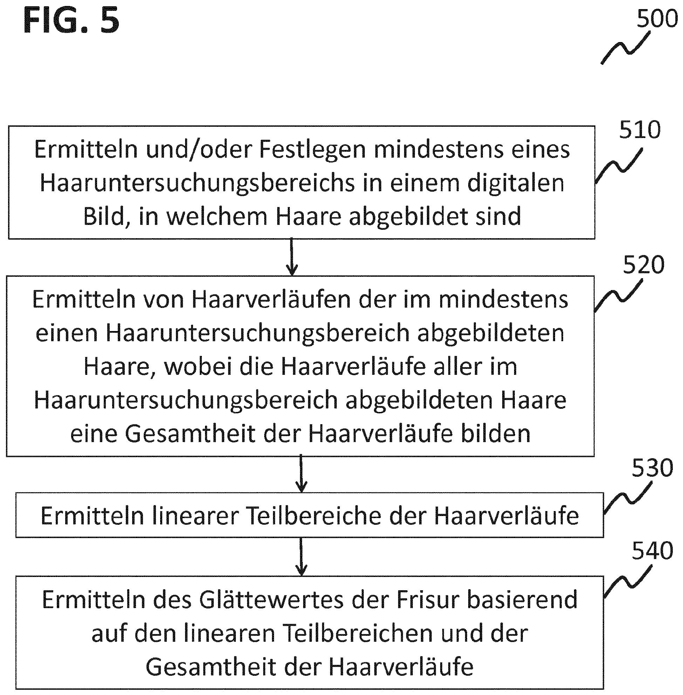

FIG. 5 zeigt ein Flussdiagramm 500 eines Verfahrens zum Ermitteln eines Glättewerts einer Frisur gemäß verschiedenen Ausführungsbeispielen.

In verschiedenen Ausführungsbeispielen weist das Verfahren ein Ermitteln und/oder Festlegen mindestens eines Haaruntersuchungsbereichs in einem digitalen Bild auf, in welchem Haare abgebildet sind, aufweisen (in 510), ein Ermitteln von Haarverläufen der im mindestens einen Haaruntersuchungsbereich abgebildeten Haare, wobei die Haarverläufe aller im Haaruntersuchungsbereich abgebildeten Haare eine Gesamtheit der Haarverläufe bilden (in 520), ein Ermitteln einer Hauptrichtung der Haarverläufe (in 530) und ein Ermitteln des Glättewertes der Frisur basierend auf der Hauptrichtung der Haarverläufe und der Gesamtheit der Haarverläufe (in 540).

Figuren 4C bis 4H zeigen Bilder 100c, 100d, 100e, 100f, 100g bzw. 100h von unterschiedlich glatten Haaren zur Verwendung bei einem Verfahren zum Ermitteln eines Glättewerts einer Frisur gemäß verschiedenen Ausführungsbeispielen.

In verschiedenen Ausführungsbeispielen wurde bei dem Verfahren zum Ermitteln des Glättewerts einer Frisur für jedes der Bilder 100c bis 100h eine Kohärenz, d.h. ein Kohärenzwert, ermittelt, beispielsweise wie oben beschrieben.

Um eine Vergleichbarkeit der verschiedenen Bilder zu erhöhen können in verschiedenen Ausführungsbeispielen die einzelnen Bilder unter Verwendung einer Bildverarbeitungssoftware standardisiert werden. Beispielsweise können die Bilder 100 so bearbeitet werden, dass die jeweiligen Bildausschnitte 100B, die für die Analyse genutzt sind, gleich groß sind, z.B. dahingehend, dass ihre Pixelzahl übereinstimmt und/oder reale Abmessungen des abgebildeten Haars in den Bildern gleich oder ähnlich sind. Ferner können für die Standardisierung z.B. Farbbilder in Graustufenbilder umgewandelt werden und/oder eine Intensität der Bilder 100 so skaliert werden, dass die Bilder 100 einen ähnlichen oder gleichen Intensitätswertebereich abdecken, usw.

In verschiedenen Ausführungsbeispielen können eines oder mehrere der Bilder 100 mittels einer Bildbearbeitungssoftware verbessert werden, beispielsweise können Schärfe und/oder Kontrast erhöht werden, was ein Erkennen von Kantenverläufen erleichtern kann. In verschiedenen Ausführungsbeispielen kann Photoshop Lightroom 6 oder eine beliebige andere geeignete Bildbearbeitungssoftware für die Standardisierung und/oder die Verbesserung der Bilder genutzt werden.

Für die Bilder in FIG. 4C bis FIG. 4H ermittelte Kohärenzwerte sind in der nachfolgenden Tabelle wiedergegeben:

| Bild | Kohärenz [%] |
|------|--------------|
| Bild 1, Faserausrichtung 1 | 69 |
| Bild 2, Faserausrichtung 2 | 73 |
| Bild 3, Faserausrichtung 3 | 51 |
| Bild 4, Faserausrichtung 4 | 84 |
| Bild 5, Faserausrichtung 5 | 74 |
| Bild 6, Faserausrichtung 6 | 83 |

Somit kann anhand der ermittelten Kohärenzwerte die folgende Reihenfolge für den absteigenden Glättegrad ermittelt werden:

Bild 4 > Bild 6 > Bild 5 > Bild 2 > Bild 1 > Bild 3.

Anhand eines Vergleichs mit einer visuellen Beurteilung der Bilder hinsichtlich einer Glätte der abgebildeten Frisuren kann eine Zuverlässigkeit beurteilt werden, mit welcher die Kohärenz die Beurteilung des Glättewerts ermöglicht.

Zu dem Zweck wurden von 20 verschiedenen Juroren die Bilder 100c, 100d, 100e, 100f, 100g und 100h nach visueller Inspektion nach absteigender Glätte sortiert, die Kohärenzwerte in Ränge umgewandelt und mit der visuell ermittelten Rangfolge der Juroren anhand einer Spearman-Rangkorrelation verglichen. Es wurde ein Spearmans Rangkorrelationskoeffizient von $r_s$ = 0,8 ermittelt, was angesichts schwierig wahrnehmbarer Unterschiede (deutliche Schwankungen zeigten sich auch im Jurorenpanel) als ein guter Wert zu betrachten ist.

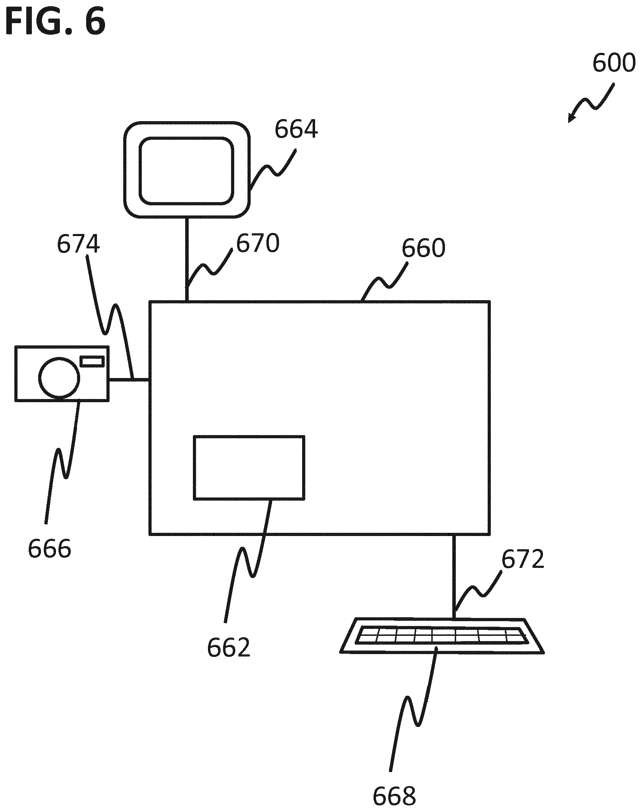

FIG. 6 zeigt eine graphische Darstellung einer Vorrichtung 600 zum Ermitteln eines Glättewerts einer Frisur gemäß verschiedenen Ausführungsbeispielen.

In verschiedenen Ausführungsbeispielen kann die Vorrichtung 600 zum Ermitteln eines Glättewerts einer Frisur eine Datenverarbeitungsvorrichtung 660 aufweisen.

Die Datenverarbeitungsvorrichtung 660 kann beispielsweise einen Computer, ein Tablet, ein Smartphone, einen Laptop oder jede andere Datenverarbeitungsvorrichtung, welche geeignet ist, das Verfahren zur computergestützten Haarfarbberatung gemäß verschiedenen Ausführungsbeispielen auszuführen, aufweisen. Vereinfachend wird die Datenverarbeitungsvorrichtung 660 hierin auch als Computer 660 bezeichnet. Die Datenverarbeitungsvorrichtung 660 kann einen Prozessor 662, beispielsweise einen Mikroprozessor, aufweisen.

In verschiedenen Ausführungsbeispielen kann die Vorrichtung 600 zum Ermitteln eines Glättewerts einer Frisur eine Anzeigevorrichtung 664 aufweisen.

Die Anzeigevorrichtung 664 kann beispielsweise einen Bildschirm eines Smartphones, eines PCs, eines Laptops oder einer sonstigen Vorrichtung 600 zum Ermitteln eines Glättewerts einer Frisur aufweisen. Die Anzeigevorrichtung 664 kann beispielsweise genutzt werden, um Ergebnisse des Verfahrens zum Ermitteln eines Glättewerts einer Frisur darzustellen, Eingabeparameter für das Ausführen des Verfahrens zu erfragen, oder Ähnliches.

Die Anzeigevorrichtung 664 kann mittels einer ersten Datenverbindung 670 mit der Datenverarbeitungsvorrichtung 660 verbunden sein. Die Anzeigevorrichtung 664 kann mit der Datenverarbeitungsvorrichtung 660 mittels der ersten Datenverbindung 670 Daten austauschen. In einem Fall, dass die Vorrichtung 600 ein Smartphone, einen Tablet o.ä. aufweist, können die Anzeigevorrichtung 664 und die erste Datenverbindung 670 in der Vorrichtung 600 integriert sein.

In verschiedenen Ausführungsbeispielen kann die Vorrichtung 600 zum Ermitteln eines Glättewerts einer Frisur eine Kamera 666 aufweisen.

Die Kamera 666 kann gemäß verschiedenen Ausführungsbeispielen eingerichtet sein, ein digitales Bild 100 von Haar 102, z.B. von Haar eines Nutzers, aufzunehmen.

Die mindestens eine Kamera 666 kann gemäß verschiedenen Ausführungsbeispielen eine digitale Fotokamera oder eine Videokamera, d.h. eine Kamera 104, welche eingerichtet sein kann, eine Mehrzahl von Einzelbildern als Zeitfolge aufzuzeichnen, aufweisen.

In verschiedenen Ausführungsbeispielen kann die Vorrichtung 600 zum Ermitteln eines Glättewerts einer Frisur eine zweite Datenverbindung 674 zwischen dem Computer 660 und der Kamera 666 aufweisen. Mittels der zweiten Datenverbindung 674 können Daten vom Computer 660 an die Kamera 666 übermittelt werden, beispielsweise für eine, z.B. herkömmliche, Softwaresteuerung der Kamera 666. Ferner können mittels der zweiten Datenverbindung 674 Daten, beispielsweise das/die von der Kamera 666 aufgenommenen digital/en Bild/er, an den Computer 660 übertragen werden. In einem Fall, dass die Vorrichtung 600 ein Smartphone, einen Tablet o.ä. aufweist, können die Kamera 666 und die zweite Datenverbindung 674 in der Vorrichtung 600 integriert sein.

In verschiedenen Ausführungsbeispielen kann bei der Vorrichtung 600 zum Ermitteln eines Glättewerts einer Frisur auf eine Kamera 666 verzichtet werden, beispielsweise wenn der Datenverarbeitungsvorrichtung 660 das digitale Bild 100 auf andere Weise bereitgestellt wird, beispielsweise mittels einer Datenübertragung.

Die Datenverarbeitungsvorrichtung 660 kann eingerichtet sein, beispielsweise unter Verwendung des Prozessors 662, das von der Kamera 666 oder auf andere Weise empfangene Bild mittels einer Bildverarbeitungssoftware zu verarbeiten, beispielsweise um auf bekannte Weise in dem empfangenen Bild den Haardarstellungsbereich zu ermitteln und, wie oben für verschiedenen Ausführungsbeispiele beschrieben, den Glättewert einer Frisur zu ermitteln. Die Bildverarbeitungssoftware kann in verschiedenen Ausführungsbeispielen eine App aufweisen.

In verschiedenen Ausführungsbeispielen kann die Datenverarbeitungsvorrichtung 600 eine Eingabevorrichtung 668 zum Bereitstellen von Informationen an die Datenverarbeitungsvorrichtung 600 aufweisen, beispielsweise eine Tastatur, eine Maus, eine berührungsempfindliche Oberfläche der Anzeigevorrichtung 664, oder ähnliches.

Die Eingabevorrichtung 668 kann mittels einer dritten Datenverbindung 672 mit der Datenverarbeitungsvorrichtung 660 verbunden sein. Die Eingabevorrichtung 668 kann mit der Datenverarbeitungsvorrichtung 660 mittels der dritten Datenverbindung 672 Daten austauschen. In einem Fall, dass die Vorrichtung 600 ein Smartphone, einen Tablet o.ä. aufweist, können die Eingabevorrichtung 668 und die dritte Datenverbindung 672 in der Vorrichtung 600 integriert sein.

Weitere vorteilhafte Ausgestaltungen des Verfahrens ergeben sich aus der Beschreibung der Vorrichtung und umgekehrt.

Die Stärke der Kräuselung von Haaren hat einen Einfluss auf den Erfolg einer Behandlung der Haare. Die Stärke der Kräuselung von Haaren nimmt insbesondere Einfluss auf die Behandlung von Haaren mit Pflegemitteln. Entsprechend kann sich an die Bestimmung eines Glättewerts einer Frisur die Ausgabe einer individuellen Behandlungsanweisung in Abhängigkeit vom ermittelten Glättewert anschließen.

Entsprechend ist ein weiterer Gegenstand der Erfindung ein Verfahren zur individualisierten Haarbehandlung, gekennzeichnet durch die Schritte

a) Ermitteln eines Glättewerts einer Frisur eines Individuums mit dem Verfahren gemäß einem der Ansprüche 1 bis 13 und

b) Ausgabe einer individuellen Behandlungsanweisung in Abhängigkeit vom ermittelten Glättewert.

Es ist bevorzugt, dass die individuelle Behandlungsanweisung die Empfehlung von Haarbehandlungsprodukten, insbesondere Haarpflegeprodukten, umfasst. Die Empfehlung kann dabei die Anzeige oder Ansage eines konkreten Produktnamens eines Haarbehandlungsmittels umfassen. Alternativ kann die Empfehlung die Anzeige oder Ansage einer Produktlinie oder -serie eines Herstellers umfassen.

Es kann ferner bevorzugt sein, dass die individuelle Behandlungsanweisung darin besteht, dem Individuum von dessen Frisur der Glättewert bestimmt wurde, zum/vom Einsatz von Haarbehandlungsprodukten, die das Individuum anhand von QR-Codes, NFC-Chips, Barcodes oder RFID-Chips, identifiziert, zu- oder abzuraten.

Die individuelle Behandlungsanweisung kann auch darin bestehen, die chemische Zusammensetzung eines Haarbehandlungsmittels, insbesondere eines Haarpflegeprodukts, zu ermitteln.

Alternativ kann die individuelle Behandlungsanweisung darin bestehen, dem Individuum zum Einsatz von Haarbehandlungsprodukten, insbesondere Haarpflegeprodukten, die für das Individuum individuell hergestellt werden, zu zuraten und einen Bestellvorgang, vorzugsweise durch Aufrufen einer Internetseite eines Herstellers von individuellen Haarpflegeprodukten, einzuleiten.

Es ist bevorzugt, dass Individuen, deren Frisuren/Haare einen niedrigen Glättewert, vorzugsweise eine Kohärenz kleiner 0,3, aufweisen, zu der Verwendung von Pflegeprodukten mit einem hohen Anteil an Fett- oder Öl-haltigen Inhaltsstoffen geraten wird, während für Frisuren/Haare mit einem hohen Glättewert, vorzugsweise mit einer Kohärenz größer 0,6, zu Haarpflegeprodukten mit einem niedrigen Anteil an Fett- oder Öl-haltigen Inhaltsstoffen geraten wird.

**Patentansprüche**

**1.** Computer-implementiertes Verfahren zum Ermitteln eines Glättewerts einer Frisur, aufweisend:

Ermitteln und/oder Festlegen mindestens eines Haaruntersuchungsbereichs in einem digitalen Bild (100, 100a, 100b) einer Frisur, in welchem Haare (102) abgebildet sind;
Ermitteln von Haarverläufen der im mindestens einen Haaruntersuchungsbereich (B100, B100_1, B100_2, B100_3, B100_4) auf dem digitalen Bild der Frisur abgebildeten Haare, wobei die Haarverläufe aller im Haaruntersuchungsbereich abgebildeten Haare eine Gesamtheit der Haarverläufe bilden;
Ermitteln einer Hauptrichtung der Haarverläufe; und
Ermitteln des Glättewertes der Frisur basierend auf der Hauptrichtung der Haarverläufe und der Gesamtheit der Haarverläufe,

wobei das Ermitteln des Glättewertes der Frisur basierend auf der Hauptrichtung der Haarverläufe und der Gesamtheit der Haarverläufe ein Ermitteln einer Kohärenz unter Verwendung eines Strukturtensors J aufweist, wobei der Strukturtensor $J = <\nabla f, \nabla f^T>w$ eine positive definite 2x2 Matrix von Gradienten der Funktion f bezüglich der Bildkoordinaten x,y ist, wobei f das digitale Bild beschreibt, und die Hauptrichtung mittels Eigenwerten des Strukturtensors ermittelt wird.

2.   Verfahren gemäß Anspruch 1, ferner umfassend ein Ermitteln einer Dispersion einer Winkelverteilung der Gesamtheit der Haarverläufe.

3.   Verfahren gemäß einem der Ansprüche 1 oder 2,
wobei das Ermitteln oder Festlegen mindestens eines Haaruntersuchungsbereichs ein Festlegen des mindestens einen Haaruntersuchungsbereichs durch einen Nutzer aufweist.

4.   Verfahren gemäß Anspruch 3,
wobei das Festlegen des mindestens einen Haaruntersuchungsbereichs durch den Nutzer ein Festlegen von Position und/oder Form und/oder Größe des Haaruntersuchungsbereichs aufweist.

5.   Verfahren gemäß einem der Ansprüche 1 bis 3,
wobei das Ermitteln oder Festlegen mindestens eines Haaruntersuchungsbereichs aufweist:

Ermitteln eines Haardarstellungsbereichs, in welchem die Haare im digitalen Bild abgebildet sind; und Festlegen zumindest eines Teils des Haardarstellungsbereichs als den mindestens einen Haaruntersuchungsbereich.

6.   Verfahren gemäß Anspruch 5,
wobei der mindestens eine Haaruntersuchungsbereich den gesamten Haardarstellungsbereich aufweist.

7.   Verfahren gemäß einem der Ansprüche 1 bis 6,
wobei der mindestens eine Haaruntersuchungsbereich eine Mehrzahl von Haaruntersuchungsbereichen aufweist.

8.   Verfahren gemäß Anspruch 7,
wobei die Mehrzahl von Haaruntersuchungsbereichen sich voneinander in ihrer Mittelpunktposition unterscheiden.

9.   Verfahren gemäß Anspruch 8,
wobei die Mehrzahl von Haaruntersuchungsbereichen sich voneinander in ihrer Größe unterscheiden.

10.   Verfahren gemäß Anspruch 9,
wobei die Mehrzahl von Haaruntersuchungsbereichen eine gemeinsame Mittelpunktposition aufweist.

11.   Verfahren gemäß Anspruch 8, ferner aufweisend:
Inbeziehungsetzen der ermittelten Glättewerte der Frisur zu den Mittelpunktpositionen der Haaruntersuchungsbereiche.

12.   Verfahren gemäß Anspruch 8, ferner aufweisend:
Inbeziehungsetzen der ermittelten Glättewerte der Frisur zu den Größen der Haaruntersuchungsbereiche.

13.   Verfahren gemäß einem der Ansprüche 1 bis 12, ferner aufweisend:
Darstellen des ermittelten Ergebnisses.

14.   Vorrichtung (600) zum Ermitteln eines Glättewerts einer Frisur,
aufweisend:

eine Datenverarbeitungsvorrichtung (660); und
eine Anzeigevorrichtung (664);
wobei die Datenverarbeitungsvorrichtung eingerichtet ist, das Verfahren gemäß einem der Ansprüche 1 bis 13 auszuführen.

15.   Computer-implementiertes Verfahren gemäß einem der Ansprüche 1 bis 13, ferner umfassend den Schritt:

a) Ausgabe einer individuellen Behandlungsanweisung in Abhängigkeit vom ermittelten Glättewert.

**Claims**

1. A computer-implemented method for determining a smoothness value of a hairstyle, comprising:

   determining and/or defining at least one hair examination region in a digital image (100, 100a, 100b) of a hairstyle in which hair (102) is depicted;
   determining hair profiles of the hair depicted in at least one hair examination region (B100, B100_1, B100_2, B100_3, B100_4) on the digital image of the hairstyle, wherein the hair profiles of all hair depicted in the hair examination region form a totality of the hair profiles;
   determining a main direction of the hair profiles; and
   determining the smoothness value of the hairstyle on the basis of the main direction of the hair profiles and the totality of the hair profiles,
   wherein determining the smoothness value of the hairstyle on the basis of the main direction of the hair profiles and the totality of the hair profiles comprises determining a coherence using a structure tensor J,
   where the structure tensor $J = <\nabla f, \nabla f^T>w$ is a positive definite 2x2 matrix of gradients of the function f with respect to the image coordinates x,y, where f describes the digital image, and the main direction is determined using eigenvalues of the structure tensor.

2. The method according to claim 1, further comprising determining a dispersion of an angular distribution of the totality of the hair profiles.

3. The method according to one of claims 1 or 2,
   wherein determining or defining at least one hair examination region comprises the user defining the at least one hair examination region.

4. The method according to claim 3,
   wherein the user defining the at least one hair examination region comprises defining a position and/or shape and/or size of the hair examination region.

5. The method according to one of claims 1 to 3,
   wherein determining or defining at least one hair examination region comprises: determining a hair display region in which the hair is depicted in the digital image; and defining at least a portion of the hair display region as the at least one hair examination region.

6. The method according to claim 5,
   wherein the at least one hair examination region comprises the entire hair display region.

7. The method according to one of claims 1 to 6,
   wherein the at least one hair examination region comprises a plurality of hair examination regions.

8. The method according to claim 7,
   wherein the plurality of hair examination regions differ from one another in their center position.

9. The method according to claim 8,
   wherein the plurality of hair examination regions differ from one another in their size.

10. The method according to claim 9,
    wherein the plurality of hair examination regions have a common center position.

11. The method according to claim 8, further comprising:
    relating the determined smoothness values of the hairstyle to the center positions of the hair examination regions.

12. The method according to claim 8, further comprising:
    relating the determined smoothness values of the hairstyle to the sizes of the hair examination regions.

**13.** The method according to one of claims 1 to 12, further comprising:
displaying the determined result.

**14.** A device (600) for determining a smoothness value of a hairstyle, comprising:

a data processing device (660); and
a display device (664);
wherein the data processing device is configured to carry out the method according to one of claims 1 to 13.

**15.** The computer-implemented method according to one of claims 1 to 13, further comprising the step of:

a) issuing an individual treatment instruction depending on the determined smoothness value.


**Revendications**

**1.** Procédé mis en œuvre par ordinateur permettant de déterminer une valeur de lissage d'une coiffure, présentant :

la détermination et/ou la définition d'au moins une zone d'examen de cheveux dans une image numérique (100, 100a, 100b) d'une coiffure dans laquelle des cheveux (102) sont représentés ;
la détermination de tracés de cheveux des cheveux représentés dans l'au moins une zone d'examen de cheveux (B100, B100_1, B100_2, B100_3, B100_4) sur l'image numérique de la coiffure, dans lequel les tracés de cheveux de tous les cheveux représentés dans la zone d'examen de cheveux forment un ensemble des tracés de cheveux ;
la détermination d'une direction principale des tracés de cheveux ; et
la détermination de la valeur de lissage de la coiffure sur la base de la direction principale des tracés de cheveux et de l'ensemble des tracés de cheveux,
dans lequel la détermination de la valeur de lissage de la coiffure sur la base de la direction principale des tracés de cheveux et de l'ensemble des tracés de cheveux présente une détermination d'une cohérence à l'aide d'un tenseur de structure J,
dans lequel le tenseur de structure $J = <\nabla f, \nabla f^T>w$ est une matrice 2 x 2 définie positive de gradients de la fonction f par rapport aux coordonnées d'image x,y, dans lequel f décrit l'image numérique, et la direction principale est déterminée au moyen de valeurs propres du tenseur de structure.

**2.** Procédé selon la revendication 1, comprenant en outre une détermination d'une dispersion d'une distribution angulaire de l'ensemble des tracés de cheveux.

**3.** Procédé selon l'une des revendications 1 ou 2,
dans lequel la détermination ou la définition d'au moins une zone d'examen de cheveux présente une définition de l'au moins une zone d'examen de cheveux par un utilisateur.

**4.** Procédé selon la revendication 3,
dans lequel la définition par l'utilisateur de l'au moins une zone d'examen de cheveux présente une définition de position et/ou de forme et/ou de taille de la zone d'examen de cheveux.

**5.** Procédé selon l'une des revendications 1 à 3,
dans lequel la détermination ou la définition d'au moins une zone d'examen de cheveux présente : la détermination d'une zone de présentation de cheveux dans laquelle les cheveux sont représentés sur l'image numérique ; et la définition d'au moins une partie de la zone de présentation de cheveux comme étant l'au moins une zone d'examen de cheveux.

**6.** Procédé selon la revendication 5,
dans lequel l'au moins une zone d'examen de cheveux présente la totalité de la zone de présentation de cheveux.

**7.** Procédé selon l'une des revendications 1 à 6,
dans lequel l'au moins une zone d'examen de cheveux présente une pluralité de zones d'examen de cheveux.

**8.** Procédé selon la revendication 7,

dans lequel les zones d'examen de cheveux de la pluralité de zones d'examen de cheveux diffèrent les unes des autres par leur position centrale.

9. Procédé selon la revendication 8,
dans lequel les zones d'examen de cheveux de la pluralité de zones d'examen de cheveux diffèrent les unes des autres par leur taille.

10. Procédé selon la revendication 9,
dans lequel la pluralité de zones d'examen de cheveux présentent une position centrale commune.

11. Procédé selon la revendication 8, présentant en outre :
la mise en relation de la valeur de lissage déterminée de la coiffure avec les positions centrales des zones d'examen de cheveux.

12. Procédé selon la revendication 8, présentant en outre :
la mise en relation de la valeur de lissage déterminée de la coiffure avec les tailles des zones d'examen de cheveux.

13. Procédé selon l'une des revendications 1 à 12, présentant en outre :
la présentation du résultat déterminé.

14. Dispositif (600) permettant de déterminer une valeur de lissage d'une coiffure, présentant :

un dispositif de traitement de données (660) ; et
un dispositif d'affichage (664) ;
dans lequel le dispositif de traitement de données est configuré pour mettre en œuvre le procédé selon l'une des revendications 1 à 13.

15. Procédé mis en œuvre par ordinateur selon l'une des revendications 1 à 13, comprenant en outre l'étape consistant à :

a) émettre une instruction de traitement individuelle en fonction de la valeur de lissage déterminée.

**FIG. 1A**

100, 100a

102

B100

**FIG. 1B**

100, 100b

102

B100

# FIG. 2A

| Probe | Richtung (A°) | Dispersion (A°) | Menge | Güte |
|---|---|---|---|---|
| Lockig | -20,20 | 20905,87 | 1,00 | 0,26 |

# FIG. 2B

| Probe | Richtung (A°) | Dispersion (A°) | Menge | Güte |
|---|---|---|---|---|
| Glatt | 38,24 | 2,48 | 0,75 | 0,99 |

# FIG. 3A

300

| Nr. | Xc | Yc | Zc | Zone | Ellip... | Vorfilter | Energie | Orientierg. | Kohärenz/ |
|-----|-----|-----|-----|------|----------|-----------|---------|-------------|-----------|
| 1 | 350 | 350 | 1 | ✓ | ✓ | 0,00 | 396,54 | -61,09 | 0,160 |

# FIG. 3B

301

| Nr. | Xc | Yc | Zc | Zone | Ellip... | Vorfilter | Energie | Orientierg. | Kohärenz/ |
|-----|-----|-----|-----|------|----------|-----------|---------|-------------|-----------|
| 1 | 350 | 350 | 1 | ✓ | ✓ | 0,00 | 317,87 | 40,74 | 0,904 |

# FIG. 4A

100, 100a

102

B100_1    B100_2

# FIG. 4B

100, 100a

102

B100

B100_3    B100_4

# FIG. 4C

100, 100c

102

B100

# FIG. 4D

100, 100d

102

B100

# FIG. 4E

100, 100e

102

B100

# FIG. 4F

100, 100f

102

B100

## FIG. 4G

100, 100g

102

B100

## FIG. 4H

100, 100h

102

B100

# FIG. 5

500

510

Ermitteln und/oder Festlegen mindestens eines Haaruntersuchungsbereichs in einem digitalen Bild, in welchem Haare abgebildet sind

520

Ermitteln von Haarverläufen der im mindestens einen Haaruntersuchungsbereich abgebildeten Haare, wobei die Haarverläufe aller im Haaruntersuchungsbereich abgebildeten Haare eine Gesamtheit der Haarverläufe bilden

530

Ermitteln linearer Teilbereiche der Haarverläufe

540

Ermitteln des Glättewertes der Frisur basierend auf den linearen Teilbereichen und der Gesamtheit der Haarverläufe

# FIG. 6

600

664

674

670

660

666

662

672

668

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 20050211599 A1

**In der Beschreibung aufgeführte Nicht-Patentliteratur**

• **VON N. LECHOCINSKI**. Fiber orientation measurement using polarization imaging. *J: Cosmet. Sci*